Europäisches Patentamt

European Patent Office

Office européen des brevets

(11) Veröffentlichungsnummer: **0 485 922 A1**

## (12) EUROPÄISCHE PATENTANMELDUNG

(21) Anmeldenummer: **91119176.5**

(22) Anmeldetag: **11.11.91**

(51) Int. Cl.5: **C01B** 3/02, C01B 3/22, C01B 5/00, F02B 43/10

(30) Priorität: **12.11.90 DE 4035927**

(43) Veröffentlichungstag der Anmeldung: **20.05.92 Patentblatt 92/21**

(84) Benannte Vertragsstaaten:
**AT BE CH DE DK ES FR GB GR IT LI LU NL SE**

(71) Anmelder: **Battelle-Institut e.V. Am Römerhof 35 Postfach 900 160 W-6000 Frankfurt/Main 90(DE)**

(72) Erfinder: **Marinescu-Pasoi, Lucian, Dr. Hansa-Allee 110 W-6000 Frankfurt am Main 1(DE)**
Erfinder: **Sandstede, Gerd, Dr. Esperantostrasse 5 W-6000 Frankfurt am Main 70(DE)**

(54) **Verfahren und Vorrichtung zur Nutzung von Kohlenwasserstoffen und Biomassen.**

(57) Verfahren und Vorrichtung zur Nutzung von Kohlenwasserstoffen und Biomassen unter Erzeugung von Wasserstoff bei deren thermischer Spaltung, wobei die thermische Spaltung der der Kohlenwasserstoffe und trockenen Biomassen unter Luftausschluß durchgeführt wird und die zur Spaltung erforderliche Energie wahlweise durch Verbrennung eines Teils des bei der Spaltung entstehenden Wasserstoffs, Energiezufuhr aus einem Hochtemperaturkernreaktor oder Zufuhr solartechnisch erzeugter Energie erfolgt und der entstehende bzw. übrige Wasserstoff insbesondere energetisch genutzt wird und der entstehende Kohlenstoff für eine nichtenergetische Nutzung bereitgestellt oder gespeichert wird. Es sind vielfältige stationäre und auch mobile Vorrichtungen auf dieser Grundlage realisierbar, wobei u.a. eine mobile Vorrichtung (1, 7, 8, 9, 10, 11) mit einem flüssigen Kohlenwasserstoff enthaltenden Tank (8) möglich ist, die einem Motor (11) bzw. einer Brennstoffzelle den bei der thermischen Spaltung entstehenden Wasserstoff zuführt, von dem ein Teil für die zur Spaltung erforderliche Energie vorzugsweise katalytisch oder katalytisch unterstützt verbrannt wird.

EP 0 485 922 A1

Die Erfindung betrifft Verfahren und Vorrichtungen zur Erzeugung von Wasserstoff durch thermische Spaltung von Kohlenwasserstoffen und Biomassen, um diese umweltfreundlich zu nutzen.

Es sind bereits die unterschiedlichsten Verfahren und Vorrichtungen zur Erzeugung von Wasserstoff vorgeschlagen worden, der u.a. als besonders umweltfreundlicher Kraft- bzw. Brennstoff an zunehmender Bedeutung gewinnt, da bei seiner Verbrennung mit dem Verbrennungsprodukt Wasser kein $CO_2$ erzeugt wird, welches eines der Spurengase darstellt, die für den sogenannten Treibhauseffekt mitverantwortlich gemacht werden und deren Emission daher soweit wie möglich zu reduzieren ist.

Um Wasserstoff in Kraftfahrzeugen als Benzinersatz bereitzustellen, wurden eine Reihe von Verfahren und Systemen vorgeschlagen und untersucht. Dazu gehört die Speicherung von verflüssigtem Wasserstoff in Dewargefäßen, wodurch sich naturgemäß handhabungstechnische Probleme ergeben. Synthetische Kraftstoffe wie Methanol bieten in dieser Hinsicht zwar Vorteile, führen jedoch wieder zu schlechteren Emissionswerten. Die alternative Lösung der Wasserstoffspeicherung in Hydridspeichern, beinhaltet kostenaufwendige und sehr schwere Speichersysteme. (Eine Übersicht solcher Systeme findet sich in dem Kapitel "Der Einsatz von Wasserstoff im Transportsektor", in Elektrizitätsverwertung, Jg.50, 1975, Nr.6, Seiten 225, 226.)

Die derzeitige Produktion von Wasserstoff zu etwa 90% von fossilen Rohstoffen aller Art aus. Die unterschiedlichen zur Verfügung stehenden Kohlenwasserstoffe sind durch drei Verfahrensprinzipien in Wasserstoff umsetzbar:

1. Dampfreformierung, d.h. endotherme katalytische Umsetzung mit Wasser,

2. Partielle Oxidation, d.h. exotherme bzw. autotherme Umsetzung mit Sauerstoff, und

3. Pyrolyse, d.h. endotherme Spaltung der Kohlenwasserstoffe.

Auf den Seiten 95 bis 105 der Dechema-Monographien Band 106, VCH-Verlagsgesellschaft 1986, wird hierzu Stellung genommen. Die Pyrolyseverfahren dienen im allgemeinen zur Herstellung von Ruß und Koks, wobei jedoch Wasserstoff auch in recht erheblichen Mengen als Nebenprodukt anfallen kann, weshalb bereits in Betracht gezogen wurde, dieses Verfahren zur Wasserstofferzeugung heranzuziehen. Die bekannten Verfahren sind jedoch nicht umweltfreundlich, da sie auf einer Verbrennung der Kohlenwasserstoffe beruhen, bei der $CO_2$ entsteht. Bei der Rußerzeugung wird batchweise gearbeitet (z.B. Ullmanns Encyklopädie der technischen Chemie, 4. Auflage, Band 14, Seiten 636 bis 643). Es werden zunächst Erdgas bzw. Methan mit einem Luftgemisch verbrannt, wobei im Rußreaktor etwa 1400 °C erreicht werden. Anschließend wird die Luftzufuhr abgeschaltet und es findet der endotherme Spaltprozeß statt. Wird ein Teil des hierbei entstehenden Wasserstoffs abgezweigt und zurückgeleitet, so können feinere Ruße erzeugt werden. Durch Katalysatoren und Zirkulation von nicht gespaltenem noch etwa 800 °C heißen Methan und durch Wärmeaustauscher, die dafür sorgen, daß das dem Reaktor zugeführte, zum Teil zu verbrennende Methan bereits eine erhöhte Temperatur aufweist, ist es möglich, vom batchweisen zum kontinuierlichen Prozeß überzugehen. Somit hätte man zwar ein System zur kontinuierlichen Wasserstofferzeugung zur Verfügung, dieses ist jedoch wegen der gleichzeitigen $CO_2$-Erzeugung nicht umweltfreundlich. Mit anderen Worten gewinnt man einen umweltfreundlichen, energetisch nutzbaren Stoff unter Erzeugung eines umweltfeindlichen Begleitprodukts.

Diese Betrachtungen gelten im wesentlichen auch für die Erzeugung von Wasserstoff aus Biomassen. Bei den bekannten Verfahren wird von wasserhaltiger Biomasse ausgegangen, die unter Einspeisung von Reaktionsenergie in einem Reformingverfahren, durch partielle Oxidation oder wiederum durch Pyrolyse in Wasserstoff, Kohlendioxid und Kohlenmonoxid gespalten wird.

Ferner sind Pyrolyxverfahren z. B. aus der DE-AS 10 65 385 und der US-PS 39 93 458 bekannt. In der DE-AS 10 65 385 wird über elektrische Lichtbögen innerhalb des Crackvolumens induzierte elektrochemische Energie verwendet. Das eingesetzte schlecht leitende Dieselöl muß daher auch mit Graphitkörnern durchwirbelt werden, damit die Entladungen überhaupt in ausgedehnteren Volumina eines Behälters von insgesamt nur 15 cm Durchmesser erzeugt werden können und die Crackung halbwegs überall erfolgt. Bei diesem teuren Verfahren, das den Zusatz leitender Feststoffteilchen beinhaltet, wird Ruß gebildet und Wasserstoff entsteht lediglich als nicht genutztes Nebenprodukt. Eine effektive energetische Wasserstoffnutzung wäre im übrigen mit diesem System nicht möglich.

Die US-PS 39 93 458 beschreibt zwar, daß erzeugter Wasserstoff z.B. als Brennstoff Weiterverwendung finden soll, jedoch geht bereits aus den angegebenen Umsetzungsformeln hervor, daß bei den durch die verwendete Solarofenenergie hervorgerufenen pyrolytischen Umsetzungen von festen Kohlenwasserstoffen in einem chemischen Wirbelschichtreaktor im Brennpunkt des Solarofens stets $CO_2$ entsteht.

Das aus der DE-OS 27 52 472 entnehmbare Verfahren entspricht einer Dampfreformierung. Ein heliumgekühlter Kernreaktor und ein Röhrenspaltofen sind gemeinsam in einem Betondruckbehälter untergebracht. Das heiße Heliumgas des Kernreaktors strömt entlang der Röhren, durch die ein $CH_4/H_2O$ Gemisch geleitet wird, welches in üblicher Weise in $H_2$, CO und $CO_2$ umgesetzt wird. Somit wird Wasserstoff unter Einsatz nuklearer Energie erzeugt, jedoch nicht $CO_2$-frei.

Ferner ist es aus der US-PS 44 10 504, die im Oberbegriff der Patentansprüche 1 bis 3 gewürdigt ist, bekannt, mittels einer Induktions- oder Widerstandsheizung, die ein Spaltvolumen von einigen cm Durchmesser umgibt, unter Aufbringung von 1000 °C bis 1200 °C durchströmendes Methan zur Erzeugung hochdichter Kohlenstoffabscheidungen in Kohlenstoff und Wassersoff zu spalten. Es ist ferner ausgesagt, daß auch das erzeugte Wasserstoffgas für kommerzielle Zwecke verwendbar ist. Wie jedoch mit diesem System eine effektive Nutzung der entstehenden Wassersoffmengen möglich sein könnte, ist für den Fachmann nicht vorstellbar.

Die Erfindung hatte sich die Aufgabe gestellt, eine umweltfreundliche Nutzung von Kohlenwasserstoffen oder Biomassen anzugeben, bei der Wasserstoff als effektiv, insbesondere energetisch nutzbare Komponente gewonnen wird und bei der bei Kohlenwasserstoffen überhaupt kein $CO_2$ und bei Biomassen kein zusätzliches $CO_2$ entsteht - und zwar auch nicht bei der Erzeugung der zur Spaltung erforderlichen Wärmeenergie.

Diese Aufgabe wird erfindungsgemäß gelöst, indem von der in praktikablen Systemen zur effektiven Kohlenwasserstoffnutzung bisher angewandten Praxis, die hohe Verbrennungsenergie des in den Kohlenwasserstoffen und Biomassen vorhandenen Kohlenstoffs zu nutzen, abgegangen wird und deren thermische Spaltung unter Luftausschluß ohne $CO_2$-Erzeugung durchgeführt wird. Wie weiter unten im einzelnen ausgeführt, wird der zunächst in Bezug auf eine energietechnisch möglichst effektive Lösung bestehende Widerspruch dieser Maßnahme dadurch behoben, daß die zur thermischen Spaltung der Kohlenwasserstoffe bzw. Biomassen notwendige Energie entweder durch Verbrennung eines Teils des bei der Spaltung entstehenden, aus dem Spaltvolumen abgezogenen Wasserstoffs in einem an das Spaltvolumen angrenzenden Raum von außen zugeführt wird, oder durch im Vergleich zur oben erwähnten Widerstandsheizung unkonventionell, kerntechnisch oder solartechnisch erzeugte Energie aufgebracht wird.

Durch die erstgenannte Möglichkeit der vorzugsweise katalytisch oder katalytisch unterstützten Verbrennung eines Teils des entstehenden Wasserstoffs wird man gerade unabhängig von zusätzlichen, andere Energie verbrauchenden Einrichtungen und gelangt zu einem autarken System. Hierdurch wird z.B. die vorteilhafte mobile , weiter unten erklärte Einrichtung möglich, die eine praktikable Alternative zur Benzinverbrennung als Energiequelle für Kraftfahrzeuge bietet.

Auch die entsprechende stationäre Lösung z.B. zur Biomassenspaltung bringt gegenüber den bisherigen Lösungen einen erheblichen technischen Fortschritt, die stets einen Teil des Ausgangsmaterials selbst (unter $CO_2$-Entwicklung) verbrennen, um die Spaltenergie aufzubringen, nicht jedoch einen Teil des $CO_2$-frei erzeugten Wasserstoffgases selbst. Zwar wird gemäß obiger Beschreibung bei einem bekannten System ein Teil des entstehenden Wasserstoffs in einen Pyrolysereaktor zurückgeleitet, jedoch wird hierbei der Wasserstoff mit dem Ausgangsstoff vermischt und mit diesem verbrannt. Hingegen wird erfindungsgemäß der Wasserstoff gerade nicht mit dem Spaltmaterial in Berühreng gebracht, sondern führt durch seine Verbrennung in einem Umgebungsraum Energie von außen zu.

Auch die neuartige Verwendung von Solartürmen und Kernreaktoren für die thermische Kohlenwassersoffspaltung ist nicht mit dem erwähnten Widerstandsheizsystem vergleichbar und stellt ein Abgehen von dieser konventionellen Maßnahme dar. Bei der Alternative der Integration des Spaltvolumens in den Solarreceiver ergibt sich ferner der beachtliche Vorteil einer Absorptionswirkung der entstehenden Kohlenstoffteilchen für die Solarstrahlen. Dies bedeutet eine automatische Wirkungsgraderhöhung, ohne daß Kohlenstoffteilchen hierfür eingebracht werden müßten. Auch die vorzugsweise angewandte Vorwärmung des zu spaltenden Materials im Wärmeaustauscher, dem der Spaltwasserstoff zugeführt wird, erhöht den Wirkungsgrad.

Neben der direkten energetischen Nutzung des gewonnenen Wasserstoffs ist es leicht möglich, diesen auch für die Synthese zu $NH_3$ zu verwenden. Ein entsprechendes stationäres System beinhaltet die vorzugsweise katalytisch oder katalytisch unterstützt ablaufende Verbrennung eines Teils des Wasserstoffs unter Luftzufuhr. Der in der Luft enttene Stickstoffanteil wird mit dem erzeugten nicht zurückgeleiteten $H_2$ auf an sich bekannte Weise synthetisiert.

Wasserstoff, der eine besonders umweltfreundliche energetische Nutzung gestattet, wird somit stets unter Vermeidung der $CO_2$-Problematik erzeugt. Die Wirtschaftlichkeit wird darüberhinaus dadurch angehoben, daß gleichzeitig $CO_2$-frei Reinkohlenstoff gewonnen wird, der für nichtenergetische Nutzung zur Verfügung gestellt bzw. gespeichert oder deponiert wird.

Da die thermische Spaltung der Kohlenwasserstoffe und Biomassen nicht mehr wie bisher durch teilweise Verbrennung eines Teils des Kohlenwasserstoffs in einer Flamme mit hoher Temperatur erfolgt, sondern durch gezielte Energiezufuhr von außen, besteht der Vorteil, daß die Temperatur der thermischen Spaltung in erheblichem Maße besser kontrollier- und regelbar ist.

Ein besonderer Vorteil der Erfindung liegt zudem darin, daß auch kohlenwasserstoffhaltige Substanzen wie Ölsande, Teersande und Ölschiefer, die höhere Kohlenwasserstoffe in unterschiedlicher Konzentration speichern, auf höchst effektive Weise genutzt werden können. In jüngster Zeit beginnt man, die Kohlenwasserstoffe als Schweröl in einem aufwendigen Verfahren aus diesen Substanzen zu gewinnen, indem man die ölhaltigen Sande durch einen Ofen (Kessel, Drehrohr usw.) schleust oder mit Wasserdampf behandelt, wodurch die Kohlenwasserstoffe flüssig abgetrennt werden. Durch das erfindungsgemäße Verfahren ist es in überraschender Weise möglich, die kohlenwasserstoffhaltigen Sande ohne weitere Maßnahmen unter Luftabschluß gleich auf eine Temperatur von 500 °C bis 800 °C zu erhitzen, wodurch die Spaltung der Kohlenwasserstoffe herbeigeführt wird. Der Wasserstoff wird gewonnen und steht zur energetischen Nutzung zur Verfügung. Der Kohlenstoff bleibt im Sand zurück und wird mit diesem entsorgt und hierzu z.B. einfach zur Lagerstätte zurückgebracht. Ähnlich könnte man auch wasserstoffreiche Kohle, Braunkohle oder ähnliche Substanzen zu Wasserstoff verarbeiten.

Somit gibt die Erfindung dem Fachmann nicht nur ein Verfahren zum Ersatz der auf Kohlenstoffverbrennung beruhenden Verfahren zur Nutzung von Kohlenwasserstoffen und Biomassen an die Hand, sondern darüberhinaus die Möglichkeit, kohlenwasserstoffhaltige Stoffe auf weitaus vereinfachte Weise umweltfreundlich zu nutzen.

Durch die Nichtverbrennung des Kohlenstoffs in Kohlenwasserstoffen sind bei Methan 55,8%, bei Propan 46,8% und bei Hexan 43,8% der Verbrennungsenergie des Kohlenwasserstoffs gewinnbar. Dabei ist bereits berücksichtigt, daß für die Dissoziation der Kohlenwasserstoffe in Kohlenstoff und Wasserstoff eine auf die Verbrennungenergie des Wasserstoffs bezogene Energie von 13,1% bei Methan, 9,1% bei Propan und 8,4 % bei Hexan verbraucht werden. Wenn diese Dissoziationsenergie z.B. durch Solarenergie oder Kernenergie oder Kombinationen hiervon aufgebracht wird, so erhöht sich beispielsweise bei Methan der gewinnbare Energieanteil auf 64,2%.

Die Biomassen werden im erfindungsgemäßen Verfahren in trockener Form unter Luftausschluß erhitzt. Dabei wird lediglich das in der Biomasse enthaltene Kohlendioxid freigesetzt, wozu keine Reaktionsenergie notwendig ist, und der größere Teil als Kohlenstoff zurückbleibt. Bei Cellulose $C_6H_{10}O_5$ als Beispiel entstehen 5 Mol Wasserstoff sowie 3,5 Mol Kohlenstoff und nur 2,5 Mol Kohlendioxid gegenüber 6 Mol bei der üblichen Verbrennung. Falls sich dies als erforderlich erweist, kann man entstehendes Kohlenmonoxid durch einen Crackprozeß in Kohlenstoff und Kohlendioxid umwandeln. Insgesamt gewinnt man etwa 51% der Verbrennungsenergie der Biomasse als reine Wasserstoffenergie, die man mit viel höherem Wirkungsgrad als im Fall der Biomassenverbrennung nutzen kann. Die übliche Verbrennung von Biomassen ist zwar global gesehen $CO_2$-neutral; mit dem erfindungsgemäßen Verfahren kann man jedoch der Atmosphäre sogar $CO_2$ entziehen und als Kohlenstoff deponieren. Für die Bildung von $C_6H_{10}O_5$ werden der Atmosphäre bei der Fotosynthese 6 Mol $CO_2$ entzogen. Bei der erfindungsgemäßen Spaltung werden nur 2,5 Mol wieder freigesetzt.

Bei der thermischen Spaltung von Biomassen bzw. Kohlenwasserstoffen wird je nach Zusammensetzung eine Temperatur von etwa 700 °C bis 1100 °C benötigt. Um die Wärmeverluste zu verringern, wird in einer vorteilhaften Weiterbildung der Erfindung die Temperatur gesenkt, indem ein fester Katalysator z.B. in Form von Eisenoxid verwendet wird. Bei stationärer Anwendung kann der Reaktor für die thermische Spaltung mit dem Katalysatormaterial ausgekleidet werden.

Alternativ kann der Katalysator einem Kohlenwasserstoffgas auch in fein verteilter Form zugesetzt werden, wobei er nach der Spaltung zusammen mit dem Kohlenstoff abgeschieden wird.

Die Energiebilanz kann noch weiter verbessert werden, indem Wärmeaustauscher eingesetzt werden, die z.B. über die Durchleitung des erzeugten heißen Wasserstoffs die eingeleiteten Kohlenwasserstoffe vor deren Weiterleitung in einen Reaktor zur thermischen Spaltung erwärmen.

Auch kann in vorteilhafter Weise ausgenutzt werden, daß die entstehenden Kohlenstoffteilchen zugleich als Absorber in einem Solarreceiver wirken können und so den Wirkungsgrad der Absorption der Solarstrahlen verbessern.

Ein vollständig autonomes stationäres System ist auch ohne Kern- und Solarenergie realisierbar, indem die katalytische Verbrennung eines Teils des entstehenden Wasserstoffs mit dem oben erwähnten Wärmeaustauschereffekt kombiniert wird.

Außer solchen stationären Vorrichtungen zur Nutzung von Kohlenwasserstoffen unter Erzeugung von Wasserstoff und Kohlenstoff ist insbesondere auch eine mobile Vorrichtung mit erheblichen Vorteilen gegenüber bekannten Systemen mit Wasserstoff als alternativem Energieträger realisierbar. Bei dieser Lösung werden die bisherigen Speicherungsprobleme für den Wasserstoff gelöst, indem statt des Wasserstoffs zunächst Kohlenwasserstoffe gespeichert werden. Diese Problematik wird zwar auch von Systemen gelöst, die synthetischen Kraftstoff wie beispielsweise Methanol speichern.

Dieser wird jedoch - wenn auch mit geringeren Emissionswerten als bei Benzin - in üblicher Weise unter $CO_2$-Bildung verbrannt.

Erfindungsgemäß wird flüssiger Kohlenwasserstoff getankt und an Bord des Fahrzeugs thermisch in Kohlenstoff und Wasserstoff gespalten, wobei die hierzu notwendige Energie durch vorzugsweise katalytische oder katalytisch unterstützte Verbrennung eines Teils des entstehenden Wasserstoffs aufgebracht wird. Zum Starten der Spaltungsreaktion wird vorzugsweise Wasserstoff aus einem Speicher benutzt, wobei die Zufuhr aus dem Speicher unterbrochen wird, sobald die thermische Spaltung eingesetzt hat. Es ist auch möglich, die Spaltung z.B. durch elektrische Heizung oder durch Verbrennung sehr geringer Mengen des Kohlenwasserstoffs zu starten. Nur der Wasserstoff wird als Treibstoff energetisch genutzt, wohingegen der Kohlenstoff nichtenergetisch weiterverwendet wird und hierzu gespeichert wird.

Diese Lösung bietet den Vorteil, das einerseits die angestrebte Nutzung von Wasserstoff statt der Benzinverbrennung möglich ist, die Speicherungsprobleme von Wasserstoff vermieden sind und trotz der Verwendung von Kohlenwasserstoffen eine $CO_2$-freie Nutzung vorliegt. Wie auch bei den stationären Verfahren wird die Wirtschaftlichkeit durch die ebenfalls $CO_2$-freie Kohlenstoffgewinnung erhöht.

Trotz des Verzichts auf die Verbrennungswärme des Kohlenstoffs weist das erfindungsgemäße Verfahren eine bessere Energiebilanz auf als Systeme mit Speicherung von flüssigem oder Druck-Wasserstoff. Zwar benötigt man für die Bereitstellung einer gleichen Wasserstoffmenge wie im Fall der direkten $H_2$-Speicherung z.B. bei Methan eine etwa 5- bis 6-fache Gewichtsmenge. Da jedoch die theoretisch minimale Verflüssigungsarbeit für Methan etwa zehnmal geringer als bei Wasserstoff ist, ergibt sich eine Energieeinsparung von mindestens 40%, wenn flüssiges Methan statt flüssigem Wasserstoff getankt wird.

Außerdem entschärft sich die Isolationsproblematik, da der Siedepunkt von $CH_4$ bei 111,8 K, dagegen der von $H_2$ bei 20,4 K liegt. Infolge der sechsfach höheren Dichte von flüssigem Methan gegenüber flüssigem Wasserstoff ist das benötigte Speichervolumen etwa gleich. Ähnliche oder auch noch günstigere Betrachtungen (z.B. in Bezug auf den Siedepunkt) ergeben sich auch bei anderen Kohlenwasserstoffen wie Propan, Butan, Hexan oder noch höheren Kohlenwasserstoffen.

Vergleicht man die Speicherung von flüssigem Methan mit der Speicherung von Wasserstoff in Metallhydriden, so ergibt sich, selbst wenn Hochtemperaturhydride zum Einsatz kämen, eine beträchtliche Gewichtsreduktion.

Die katalytische und katalytisch unterstützte Verbrennung von Wasserstoff sind zudem emissionsarm. Diese Art der Wasserstoffverbrennung erreicht sehr hohe Wirkungsgrade, da das Temperaturniveau dieser Verbrennung weit unter dem der Flammenverbrennung liegt.

Durch die erfindungsgemäßen stationären und in besonderem Maße durch die mobile Lösung ist ein wichtiger Schritt in Richtung zukünftiger Wasserstoffenergiewirtschaft getan, da der Umgang mit Wasserstofftechnologien und eine Wasserstoffinfrastruktur im großen Umfang gewährleistet oder realisierbar sind. Die erfindungsgemäß realisierbaren Systeme stellen somit eine Übergangsmöglichkeit von der Kohlenwasserstoff- zur Wasserstoffwirtschaft dar, wobei insbesondere in stationären Vorrichtungen auch kohlenwasserstoffhaltige Stoffe und alternativ Biomassen nutzbar sind.

Im folgenden wird die Erfindung anhand der Zeichnungen näher erläutert. Es zeigen

Fig. 1    eine Prinzipdarstellung einer Vorrichtung zur Durchführung des erfindungsgemäßen Verfahrens,

Fig. 2    ein erstes Ausführungsbeispiel der erfindungsgemäßen Vorrichtung mit Hochtemperaturkernreaktor,

Fig. 3    ein zweites Ausführungsbeispiel mit Solarenergiezufuhr,

Fig. 4    ein drittes, modifiziertes Ausführungsbeispiel mit Solarenergiezufuhr,

Fig. 5    ein viertes Ausführungsbeispiel für eine stationäre autonome erfindungsgemäße Vorrichtung

Fig. 6    ein fünftes Ausführungsbeispiel in Form einer mobilen Vorrichtung und

Fig. 7    ein sechstes Ausführungsbeispiel in Form einer stationären Vorrichtung.

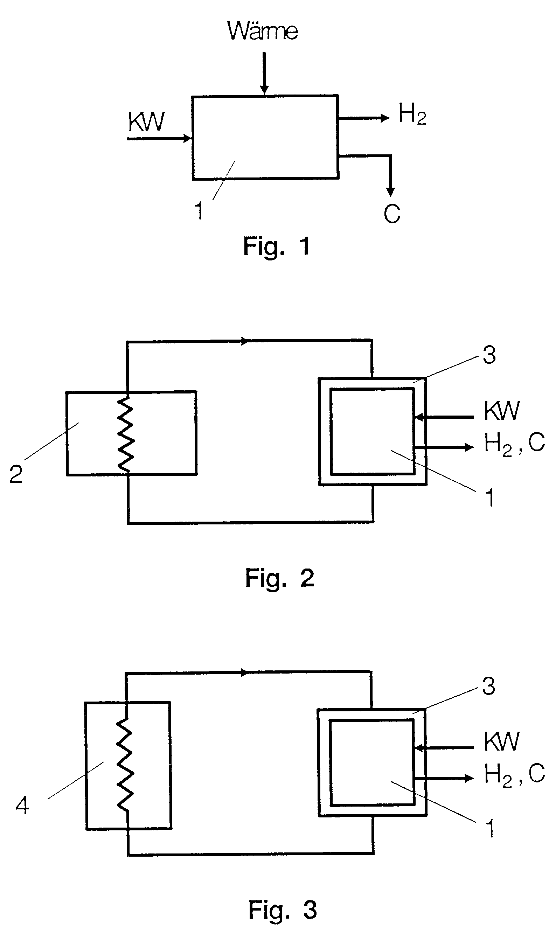

In Fig.1 wird einem Reaktorvolumen 1 mit einem entsprechenden Gehäuse je nach zugeführtem Kohlenwasserstoff KW Wärme von etwa 600 °C bis 1000 °C zugeführt und damit die zur thermischen Spaltung des KW's unter Luftausschluß erforderliche Energie aufgebracht. Der Kohlenwasserstoff wird entweder über eine Gasleitung oder aus einem Flüssigspeicher zugeführt. Der entstehende Wasserstoff wird für eine energetische Nutzung aus dem Reaktorvolumen 1 entnommen, wohingegen der Kohlenstoff zur nicht energetischen Verwendung abgeführt und gegebenenfalls gespeichert oder deponiert wird.

Diese prinzipille Vorrichtung sowie auch die anhand der Figuren 2 bis 5 erläuterten Vorrichtungen bzw. Verfahren sind darüberhinaus in gleicher Weise auf Biomassen und die oben erwähnten kohlenstoffhaltigen Stoffe anwendbar, die in das Reaktorvolumen eingeleitet oder eingebracht und dort unter Luftausschluß thermisch gespalten werden. Je nach Ausgangsstoff und Kohlenwasserstoffart sind die Spalttemperaturen entsprechend anzupasen. Insbesondere können sich hierbei auch andere Temperaturbereiche als der oben angegebene ergeben.

In Fig.2 besteht die Einrichtung zum Zuführen der Wärme aus einem Hochtemperaturkernreaktor 2, aus dem einem Wärmeaustauscher 3 z.B. Helium zugeführt wird, der das Reaktorvolumen 2 umgibt. Auf diese Weise sind Wasserstoff und Kohlenstoff ohne $CO_2$-Erzeugung aus Kohlenwasserstoff herstellbar.

In bezüglich der Sonneneinstrahlung begünstigten Ländern ist die in Fig.3 gezeigte Vorrichtung von Vorteil, in der der Kernreaktor 2 durch einen Solarturmreceiver 4 ersetzt ist, aus dem dem Wärmeaustauscher 3 Argon, Helium oder Luft zugeführt werden. Solarturmanlagen, mit denen die erforderlichen Temperaturen erzielbar sind, kann der Fachmann z.B. aus dem Artikel "Solarthermische Hochtemperatur-Wärmenutzung" von P.Wehowsky, Seite 65 bis 77, DFGWT, 10.5.88, entnehmen. Im übrigen sind Vorrichtungen denkbar, die eine Kombination der Fig.2 und 3 darstellen.

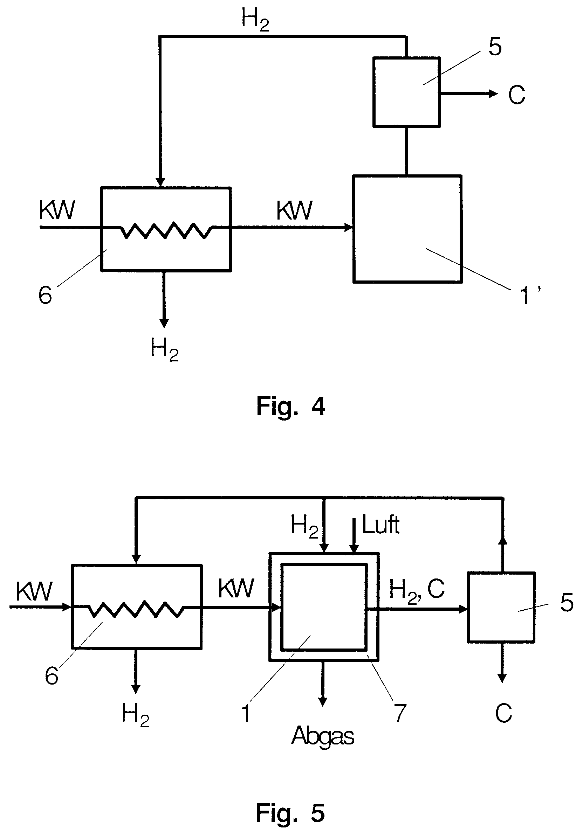

In Fig.4 ist eine Vorrichtung dargestellt, in der der KW-Spaltreaktor 1' in einen Solarreceiver integriert ist. Solarreceiver, die Raum zur Aufnahme eines Spaltreaktorvolumens bereitstellen, sind auf unterschiedlichste Weise realisierbar. Aus dem VDI Bericht Nr.704, 1988, Seite 227 bis 253, sind grundlegende Receiverkonzepte entnehmbar, die dies zulassen.

Der durch die solarenergetisch hervorgerufene Spaltung erzeugte Wasserstoff und Kohlenstoff werden einem Kohlenstoffabscheider 5 zugeleitet, aus dem einerseits Kohlenstoff und andererseits etwa 800 ° C heißer Wasserstoff entnommen werden, der einem Wärmeaustauscher 6 zugeführt wird. Dort wird der ebenfalls zugeführte Kohlenwasserstoff von etwa 30 ° C auf etwa 600 ° C vorerwärmt, bevor er dem kombinierten Spalt/Solarreaktor 1' zugeleitet wird. Aus dem Wärmeaustauscher 3 wird abgekühlter Wasserstoff entnommen.

Die Vorteile dieser Vorrichtung liegen zum einen darin, daß die Energiebilanz durch die Vorerwärmung des Kohlenwasserstoffs verbesserbar ist. Andererseits können die innerhalb des Solarreceivers erzeugten Kohlenstoffteilchen als Absorber für die Solarstrahlung wirken und so den Wirkungsgrad erhöhen.

Die Fig.5 zeigt eine stationäre Vorrichtung, die (z.B. ohne Kern- oder Solarenergie) völlig autonom arbeitet. Das Reaktorvolumen 1 umfaßt einen Mantelraum 7, in dem durch dort vorgesehene katalytische Beschichtung von Wänden oder anderen Teilen eine katalytische oder katalytisch unterstützte Verbrennung von einem etwa 10 bis 20 prozentigen Anteil des bei der KW-bzw. Biomassenspaltung erzeugten Wasserstoffs stattfindet. Hierzu wird dem Mantelraum über eine oder mehrere Zuleitungen oder auch einfach Außenwandöffnungen Luft zugeführt. Aus dem Mantelraum 7 wird Abgas (Wasserdampf, Restluft, Stickstoff, Edelgas usw.) abgeführt. Der Kohlenwasserstoff, vorzugsweise Methan, wird wiederum einem Wärmeaustauscher 6 zugeführt, dem darüberhinaus der übrige heiße Wasserstoff zugeleitet wird. Der vorerwärmte Kohlenwasserstoff wird über einen entsprechende Zuleitung dem Reaktorvolumen 1 zugeführt, das im Fall von Methan auf etwa 800 ° C gebracht wird. Kohlenstoff und Wasserstoff werden wiederum in einen Abscheider 5 geleitet. Um die Anfachung der Vorrichtung zu vereinfachen, kann zusätzlich ein Wasserstoffspeicher vorgesehen werden, über den zur Initiierung der katalytischen Verbrennung im Mantelraum 7 in einer Anfangsphase Wasserstoff eingespeist wird. Eine Initiierung kann auch (unter Aufgabe der völligen Autonomie) unter kurzzeitiger Zufuhr anderer Hilfsenergien erfolgen.

Eine weitere Steigerung der Energiebilanz ist möglich, indem die Spalttemperatur durch den Einsatz von Katalysatoren zur thermischen Spaltung gesenkt wird. Hierzu wird entweder das Katalysatormaterial in Form einer Auskleidung oder drahtförmigen Gebilden im Reaktorvolumen 1 bzw. 1' vorgesehen oder kann alternativ bei Kohlenwasserstoffgasen diesen zugesetzt werden, wobei es in vorteilhafter Weise mit dem entstehenden Kohlenstoff abscheidbar ist.

Sämtliche der obigen stationären Vorrichtungen können auch dazu verwendet werden, die bisherigen mit Kohlenwasserstoffverbrennung arbeitenden Kohlenstoff- bzw. Rußerzeuger zu ersetzen und sind nicht nur als Erzeuger für energetisch genutztem Wasserstoff in Verbindung mit Kohlenstofferzeugung einsetzbar.

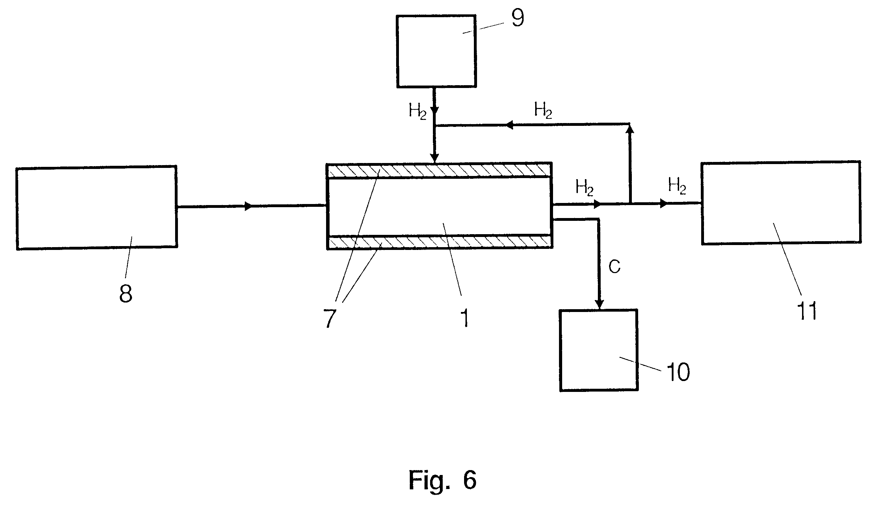

Die mobile Vorrichtung der Fig.6 umfaßt wiederum ein Spaltvolumen 1, das im dargestellten Fall einen Ringraum 7' zur katalytischen Verbrennung eines Teils des Wasserstoffes aufweist. Prinzipiell arbeitet dieser Teil genau wie bei der stationären Lösung. Ferner ist ein Tank 8 für flüssigen Kohlenwasserstoff vorgesehen, der über eine Leitung mit dem Reaktorvolumen 1 in Verbindung steht. Der entstehende Kohlenstoff wird einem Speicher 10 zugeführt. Der entstehende Wasserstoff wird zum überwiegenden Teil (etwa 80% bis 90%) einem Motor bzw. einer Brennstoffzelle 11 zugeleitet.

Um die Spaltreaktion, die wiederum durch Spaltkatalysatoren unterstützt werden kann, zu starten, wird aus einem Starter 9, in dem Wasserstoff gespeichert ist, Wasserstoff in den Verbrennungsraum 7' geleitet und dort vorzugsweise katalytisch verbrannt. Die dabei entstehende Wärme löst die Spaltung der vom KW-Tank 8 in das Reaktorvolumen 1 strömenden Kohlenwasserstoffe aus. Alternativ kann hierzu z.B. auch die Batterie ausgenutzt werden. Sobald die Produktion von Wasserstoff aus der Spaltung eingesetzt hat, wird die Wasserstoffentnahme aus dem Starter 9 abgebrochen. Die zur weiteren Produktion von Wasserstoff benötigte Wärme wird nun durch die vorzugsweise katalytische oder auch katalytisch unterstützte Verbrennung des abgezweigten Anteils des durch die thermische Spaltung erzeugten Wasserstoffs aufgebracht. Dem Motor bzw. der Brennstoffzelle 11 wird dann kontinuierlich der überwiegende Teil des Wasserstoffs zugeführt.

Der ebenfalls erzeugte Kohlenstoff, der im Speicher gesammelt wird, kann von Zeit zu Zeit durch Austausch einer Speicherpatrone beim Tanken von Kohlenwasserstoff zur organisierten Weiterverwendung entfernt werden. Obwohl zur Zeit keine wirklich brauchbaren solartechnischen Anlagen für den mobilen Einsatz vorhanden sind, ist es jedoch für die Zukunft nicht auszuschließen, daß auch die mobile Vorrichtung hiermit ausgerüstet bzw. kombiniert wird. Sowohl der mobilen als auch stationären Vorrichtung die auf dem Prinzip der Figuren 5 und 6 beruhen, können neben Umgebungsluft z.B. auch Druckluft oder Sauerstoffgas zugeführt werden.

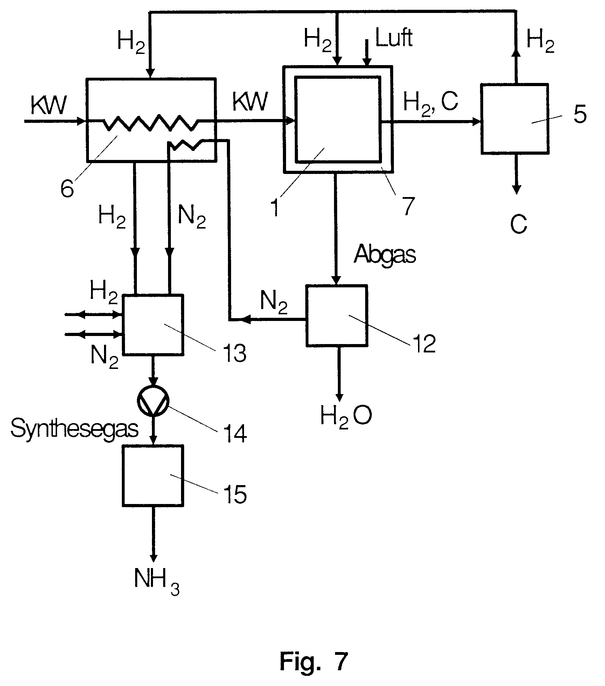

Fig. 7 zeigt eine stationäre Vorrichtung für die Ammoniak-Herstellung aus KW bzw. Biomasse ohne $CO_2$-Entstehung.

Die KW- bzw. Biomassenspaltung erfolgt, wie anhand Fig. 5 erläutert wurde, wobei der nicht für die katalytische Verbrennung benutzte Wasserstoff einem Wärmetauscher 6 zugeführt wird.

Die katalytische bzw. katalytisch unterstützte Verbrennung des Wasserstoffs mit Luft wird vorzugsweise stöchiometrisch durchgeführt, so daß das Abgas überwiegend aus Stickstoff und Wasserdampf besteht.

Das Abgas wird einem Wasserabscheider 12 zugeführt, aus dem einerseits Wasser und andererseits überwiegend Stickstoff entnommen wird, der eventuell einem Wärmetauscher 6 zugeführt wird, so daß er die gleiche Temperatur (ca. 475 - 600 °C) wie der aus 6 strömende Wasserstoff annimmt. Die beiden Gase werden in der Mischstation stöchiometrisch (1 Mol $N_2$, 3 Mol $H_2$) gemischt. Anschließend wird das System im Verdichter 14 auf 200 - 300 bar komprimiert und dem Synthesereaktor 15 zugeführt, wo Ammoniak katalytisch hergestellt wird. Die Mischstation ist nicht unbedingt erforderlich und kann wegfallen, wenn bereits in 6 das stöchiometrische Verhältnis erzielt wird.

Die Vorteile dieser Vorrichtung liegen zum einen darin, daß der ohnehin bei der katalytischen bzw. katalytisch unterstützten Verbrennung von Wasserstoff mit Luft entstehende und normalerweise abgeblasene Stickstoff zur Ammoniak-Herstellung verwendet wird.

Zudem weisen die beiden Gase ($N_2$, $H_2$) nach der KW- bzw. Biomassenspaltung ohnehin eine hohe Temperatur auf, so daß eine Aufheizung zur Reaktionstemperatur nicht notwendig ist. Dadurch verbessert sich die Energiebilanz der Ammoniaksynthese.

Mit Hilfe dieser Vorrichtung kann die Ammoniak-Herstellung aus KW bzw. Biomasse ohne $CO_2$-Entstehung durchgeführt werden.

Als Alternative zur obigen Ausführung ist es auch möglich, den in 6 zugeführten Wasserstoff teilweise auch aus dem Abgas zu entnehmen, wobei die Verbrennung im Mantelraum 7 mit $H_2$-Überschuß durchgeführt wird.

Prinzipiell ist zudem möglich, den gesamten Wasserstoff aus dem Mantelraum 7 abzuzweigen.

**Patentansprüche**

1. Verfahren zur Erzeugung von Wasserstoff durch thermische Spaltung von Kohlenwasserstoffen und Biomassen, in welchem die thermische Spaltung in für Kohelenwasserstoffe an sich bekanter Weise unter Luftausschluß und ohne $CO_2$-Erzeugung unter Zufuhr der zur Spaltung erforderlichen Wärmeenergie von außen durchgeführt wird,
dadurch gekennzeichnet,
daß die zur Spaltung erforderliche Wärmeenergie nach Einsetzen der Spaltung durch Verbrennung eines Teils des bei der Spaltung entstehenden, aus dem Spaltvolumen abgezogenen Wasserstoffs in einem an das Spaltvolumen angrenzenden Raum von außen zugeführt wird und daß der übrige Wasserstoff genutzt wird.

2. Verfahren gemaß dem Oberbegriff des Patentanspruchs 1,
dadurch gekennzeichnet,
daß die zur Spaltung erforderliche Wörmeenergie mit Hilfe eines Solarreceivers zugeführt wird, der entweder an einen das Spaltvolumen umgebenden Wärmeaustauscher angeschlossen ist oder in den das Spaltvolumen integriert ist, und daß der Wasserstoff genutzt wird.

3. Verfahren gemaß dem Oberbegriff des Patentanspruchs 1,
dadurch gekennzeichnet,
daß die zur Spaltung erforderliche Wärmeenergie mit Hilfe eines Hochtemperaturkernreaktors zugeführt wird, der an einen das Spaltvolumen umgebenden Wärmeaustauscher angeschlossen ist, und daß der Wasserstoff genutzt wird.

4. Verfahren nach Anspruch 1,
dadurch gekennzeichnet,
daß der Teil des Wasserstoffs katalytisch oder katalytisch unterstützt verbrannt wird.

5. Verfahren nach Anspruch 1 bis 4,
dadurch gekennzeichnet,
daß der bei der Spaltung entstehende Wasserstoff bzw. der übrige Teil hiervon einem Wärmeaustauscher zugeführt werden, dam auch der Kohlenwasserstoff bzw. die Biomasse zur Erwärmung vor der Spaltung zugeführt werden.

6. Verfahren nach einem der vorhergehenden Ansprüche,
dadurch gekennzeichnet,
daß der entstehende Kohlenstoff abgeschieden wird.

7. Verfahren nach einem der Ansprüche 1, 4 oder 5,
dadurch gekennzeichnet,
daß bei Anwendung für einen mobilen Einsatz zu spaltender Kohlenwasserstoff aus einem Flüssigtank entnommen wird und die Spaltung unter anfänglicher Energiezufuhr, vorzugsweise unter Verbrennung gespeicherten Wasserstoffs oder Zufuhr elektrischer Energie initiiert wird und daß der übrige, nicht für die Verbrennung abgezweigte Wasserstoff aus der Spaltung einem Motor bzw. einer Brennstoffzelle zugeführt wird.

8. Verfahren nach einem der Ansprüche 1, 4, 5, 6,
dadurch gekennzeichnet,
daß der Teil des Wasserstoffs unter Luftzufuhr katalytisch verbrannt wird.

9. Verfahren nach Anspruch 8,
dadurch gekennzeichnet,
daß der übrige Wasserstoff und in der Luft enthaltener Stickstoff zu $NH_3$ synthetisiert werden.

10. Verfahren nach einem der Ansprüche 1 bis 6,
dadurch gekennzeichnet,
daß die Kohlenwasserstoffe in Form von kohlenwasserstoffhaltigen Stoffen wie Ölsanden, Teersanden und Ölschiefern vorliegen, die wie die Biomassen unter Luftausschluß gespalten werden, wobei der entstehende Kohlenstoff im Sand bzw. Schiefer zurückbleibt.

11. Verfahren nach einem der vorhergehenden Ansprüche,
dadurch gekennzeichnet,

daß die Temperatur der thermischen Spaltung unter Einsatz von Spaltkatalysatoren herabgesetzt wird, die im Spaltreaktorvolumen vorgesehen sind oder die alternativ den Kohlenwasserstoffen oder Biomassen zugesetzt werden.

12. Vorrichtung zum Durchführen des Verfahrens nach einem der vorhergehenden Ansprüche, gekennzeichnet durch ein Reaktorvolumen (1), dem die Kohlenwasserstoffe bzw. Biomassen zur thermischen Spaltung zugeführt werden, und eine diesem Volumen (1) Wärmeenergie für die Spaltung zuführende Einrichtung (2;4;7) sowie eine Wasserstoffleitung zur Entnahme des bei der Spaltung erzeugten Wasserstoffs und eine Ableitungseinrichtung für den enstandenen Kohlenstoff.

13. Vorrichtung nach Anspruch 12,
dadurch gekennzeichnet,
daß die Wärmeenergie zuführende Einrichtung ein Hochtemperaturkernreaktor (2) ist.

14. Vorrichtung nach Anspruch 12,
dadurch gekennzeichnet,
daß die Wärmeenergie zuführende Einrichtung ein Solarturmreceiver (4) ist.

15. Vorrichtung nach Anspruch 13 oder 14,
dadurch gekennzeichnet,
daß die Wärme erzeugende Einrichtung (2;4) über eine Gasleitung mit einem das Reaktorvolumen (1) zur thermischen Spaltung umgebenden Wärmeaustauscher (3) verbunden ist.

16. Vorrichtung nach Anspruch 12,
dadurch gekennzeichnet,
daß das Reaktorvolumen (1') für die thermische Spaltung innerhalb eines Solarreceivers vorgesehen ist, so daß die entstehenden Kohlenstoffteilchen als Absorber für die Solarstrahlung wirken können.

17. Vorrichtung nach Anspruch 16,
dadurch gekennzeichnet,
daß das Reaktorvolumen (1') mit einem Wärmeaustauscher (6) verbunden ist und über diesen vorerwärmte Kohlenwasserstoffe bzw. Biomassen empfängt, wobei der Wärmeaustauscher eine mit dem Reaktorvolumen (1') verbundene Wasserstoffleitung, über die ihm bei der Spaltung erzeugter heißer Wasserstoff zugeleitet wird, eine Kohlenwasserstoff- bzw. Biomassenzuleitung und eine Ableitung für den abgekühlten Wasserstoff aufweist.

18. Vorrichtung nach einem der Ansprüche 12 bis 17,
dadurch gekennzeichnet,
daß ein mit dem Reaktorvolumen (1;1') verbundener Kohlenstoffabscheider (5) vorgesehen ist.

19. Vorrichtung nach Anspruch 12 oder 18,
dadurch gekennzeichnet,
daß die Wärme erzeugende Einrichtung eine das Reaktorvolumen (1) umgebende Verbrennungssektion (7,7') ist, der ein Teil des bei der Spaltung enstehenden Wasserstoffs zur Verbrennung zugeführt wird.

20. Vorrichtung nach Anspruch 19,
dadurch gekennzeichnet,
daß die Verbrennungssektion (7;7') Katalysatormaterialien zur katalytischen Wasserstoffverbrennung enthält.

21. Vorrichtung nach Anspruch 19 oder 20,
dadurch gekennzeichnet,
daß die Vorrichtung stationär ist und einen dem Reaktorvolumen (1) vorgeschalteten Wärmeaustauscher (6) aufweist, dem der nicht für die katalytische Verbrennung benötigte heiße Wasserstoff und die Kohlenwasserstoffe bzw. Biomassen zugeleitet werden.

22. Vorrichtung nach Anspruch 19 oder 20,
dadurch gekennzeichnet,
daß die Vorrichtung mobil ist, einen Tank (8) für flüssige Kohlenwasserstoffe, der mit dem Reaktorvolumen (1) über eine Zuleitung verbunden ist, einen an die Verbrennungssektion (7') angeschlossenen Wasserstoffspeicher (9), aus dem der Sektion beim Starten der Spaltung Wasserstoff zugeführt wird, und einen mit dem Reaktorvolumen (1) verbundenen Speicher (10) für den erzeugten Kohlenstoff aufweist, und daß das Reaktorvolumen (1') über eine Wasserstoffleitung mit einem Motor bzw. einer Brennstoffzelle (11) verbunden ist.

23. Vorrichtung nach einem der Ansprüche 12 bis 22,
dadurch gekennzeichnet,
daß im Reaktorvolumen (1;1') ein Katalysatormaterial für die thermische Spaltung vorgesehen ist.

24. Vorrichtung nach Anspruch 22,
dadurch gekennzeichnet,
daß der Speicher (10) in Form eines schnell und leicht auswechselbaren Behältnisses ausgebildet ist.

Wärme

KW →

→ H₂

→ C

1

Fig. 1

3

KW

H₂, C

2

1

Fig. 2

3

KW

H₂, C

4

1

Fig. 3

Fig. 4

Fig. 5

Fig. 6

Fig. 7

Europäisches Patentamt

**EUROPÄISCHER RECHERCHENBERICHT**

Nummer der Anmeldung

EP    91 11 9176

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-4 410 504 (F.S.GALASSO ET AL)<br>* Spalte 1, Zeile 20 - Zeile 31 *<br>* Spalte 2, Zeile 5 - Zeile 57 *<br>* Ansprüche 1,2,5 *<br>--- | 1-3,6,12 | C01B3/02<br>C01B3/22<br>C01B5/00<br>F02B43/10 |
| A | PATENT ABSTRACTS OF JAPAN<br>vol. 13, no. 504 (C-653)13. November 1989<br>& JP-A-1 203 201 ( MITSUBISHI HEAVY IND LTD )<br>16. August 1989<br>* Zusammenfassung *<br>--- | 1-3,12 | |
| A | WORLD PATENTS INDEX LATEST<br>Week 8602,<br>Derwent Publications Ltd., London, GB;<br>AN 86-011144/02<br>& JP-A-60 235 890 (MITSUBISHI HEAVY IND LTD) 22. November 1985<br>* Zusammenfassung *<br>--- | 1,19 | |
| D,A | VDI BERICHTE<br>Nr. 704, 1985,<br>Seiten 227 - 253;<br>P.KESSELRING, M.BECKER: 'Weiterentwicklung der solarthermischen Energieanlagentechnik'<br>* Seite 241, Absatz 4 - Seite 248 *<br>--- | 2,14 | |
| D,A | DE-A-2 752 472 (HOCHTEMPERATUR-REAKTORBAU GMBH)<br>* Seite 4, Absatz 1 - Seite 5, Absatz 1 *<br>* Anspruch 1 *<br>----- | 3,13 | |

RECHERCHIERTE SACHGEBIETE (Int. Cl.5)

C01B
D01F
C10J
F02B

Der vorliegende Recherchenbericht wurde für alle Patentansprüche erstellt

| Recherchenort | Abschlußdatum der Recherche | Prüfer |
|---|---|---|
| DEN HAAG | 14 FEBRUAR 1992 | VAN DER POEL W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)